# EUROPÄISCHE PATENTSCHRIFT

(11) **EP 0 780 015 B1**
(45) Veröffentlichungstag und Bekanntmachung des Hinweises auf die Patenterteilung: **08.09.1999**
(21) Anmeldenummer: 95931958.3
(22) Anmeldetag: 01.09.1995
(51) Int. Cl.: G11B 7/00, G11B 7/24, G11C 13/04, G02F 1/13, G03H 1/02, B41M 5/26

(54) **VERFAHREN ZUR VERSTÄRKUNG VON INFORMATION IN PHOTOADRESSIERBAREN SEITENKETTENPOLYMEREN**
PROCESS FOR INTENSIFYING INFORMATION IN PHOTO-ADDRESSABLE SIDE-CHAIN POLYMERS
PROCEDE D'INTENSIFICATION DE L'INFORMATION DANS DES POLYMERES A CHAINES LATERALES PHOTO-ADRESSABLES

(30) Priorität: 07.09.1994 DE 4431823
(43) Veröffentlichungstag der Anmeldung: 25.06.1997
(73) Patentinhaber: BAYER AG, 51368 Leverkusen (DE)
(72) Erfinder: HAARER, Dietrich, D-95448 Bayreuth (DE); BIERINGER, Thomas, D-95463 Bindlach (DE); EISENBACH, Claus, Dieter, D-95445 Bayreuth (DE); FISCHER, Karl, D-95449 Bayreuth (DE); RUHMANN, Ralf, D-12618 Berlin (DE); WUTTKE, Roland, D-95448 Bayreuth (DE); STUMPE, Joachim, D-10405 Berlin (DE); FISCHER, Thomas, D-10317 Berlin (DE); LÄSKER, Lutz, D-10437 Berlin (DE); RUTLOH, Michael, D-12679 Berlin (DE); CLAUSSEN, Uwe, D-51379 Leverkusen (DE)
(86) Internationale Anmeldenummer: EP9503431
(87) Internationale Veröffentlichungsnummer: WO9608007

(56) Entgegenhaltungen:
- EP-A- 0 474 473
- DE-A- 4 339 862
- GB-A- 2 248 963
- OPTICAL COMPUTING AND PROCESSING, Bd. 1, Nr. 1, 1.Januar 1991 Seiten 13-21, XP 000226128 BOWRY C ET AL 'LIQUID CRYSTAL POLYMER OPTICAL MEMORIES: ANALOGUE, DIGITAL AND HOLOGRAPHIC'

## Beschreibung

Die Erfindung betrifft ein Verfahren zur Verstärkung von mit energiereichem Licht in Polymeren durch Konfigurationsänderung von Seitengruppen erzeugter Information. Das erfindungsgemäße Verfahren gestattet, die ursprüngliche Intensität eines Bildes, die nach dem Ende des Schreibvorgangs teilweise verlorengeht, wieder zu erreichen oder gar zu übertreffen.

Ein möglicher Weg der optischen Datenspeicherung verwendet Laserlicht zur Erzeugung von Bildern mittels thermischer Zerstörung organischer Schichten (M. Emmelius, G. Pawlowski, H.J. Vollmann, Angew. Chem. 101, 1475-1502 (1989); T.N. Gerasimova, V.V. Shelkovnikov, Russ. Chem. Rev. 61, 55-66 (1992)).

Ein Nachteil dieser Methode ist die eingeschränkte Modifizier- und Löschbarkeit einmal geschriebener Bilder.

Eine andere prinzipielle Möglichkeit, Information optisch zu speichern, bedient sich der Bestrahlung von Polymeren mit Seitengruppen, die unter Lichteinwirkung ihre Konfiguration ändern. Solche "photoadressierbaren" Polymeren sind grundsätzlich bekannt: So werden beispielsweise in der WO 93/3073 Homopolymere mit Azobenzol-Seitengruppen, in der EP-A 333 022 cholesterische flüssigkristalline, in der EP-A 369 432 flüssigkristalline und in der DE-OS 38 10 722 amorphe zur optischen Informationsspeicherung geeignete Polymere beschrieben. Nach Beendigung der Bestrahlung nimmt allerdings die lichtinduzierte Veränderung der bestrahlten Zonen ab, wobei der Grad dieser Abnahme u.a. selbstverständlich von der Art des Polymeren abhängt; danach verbleibt bestenfalls ein kleiner Rest der induzierten Veränderung, der über längere Zeit stabil ist. Bei Temperaturerhöhung über die Glasübergangstemperatur Tg des Polymeren soll sich die Restveränderung weiter vermindern und bei Erreichen der Klärtemperatur vollständig verschwinden (J. Stumpe, L. Müller, L. Läsker, D. Kreysig, G. Hauck, H.D. Koswig, S. Kostromin, V. Shibaev; Proceedings 20. Freiburger Arbeitstagung Flüssigkristalle 1991).

Überraschenderweise wurde nun gefunden, daß man nach dem Ende des Schreibvorgangs und nach einer Relaxation der lichtinduzierten Veränderung den verbliebenen Effekt wieder verstärken kann, wenn man das Polymer auf eine Temperatur erwärmt, die unterhalb der Klärtemperatur und in der Nähe der Glasübergangstemperatur Tg liegt. Der erfindungsgemäße Effekt ist bereits unterhalb der Glasübergangstemperatur nachweisbar, wird aber erst oberhalb von Tg innerhalb einer für die Praxis interessanten Zeitspanne erreicht.

Gegenstand der Erfindung ist also ein Verfahren zur Verstärkung der lichtinduzierten Veränderung in einem Seitenkettenpolymer aus einer Hauptkette und davon über flexible Abstandsgruppen abzweigenden Seitengruppen aus
(1) wenigstens einer photoinduzierbar konfigurationsveränderlichen Seitengruppe und
(2) wenigstens einer von (1) verschiedenen permanent formanisotropen Seitengruppe mit hoher Anisotropie der molekularen Polarisierbarkeit
durch Erwärmen auf eine Temperatur, die zwischen der Glasübergangstemperatur und der Klärtemperatur des Seitenkettenpolymers liegt.

Als Klärtemperatur wird die Temperatur bezeichnet, bei der die nematische Phase in die isotrope Phase übergeht. Sie kann mittels DSC-Untersuchung gemessen werden (2. Heizkurve, 10°C/Minute). Die Zuordnung der Phasenarten kann durch Vergleich mit bekannten Daten aus Röntgenbeugungsuntersuchungen der Homopolymeren hergeleitet werden.

Beispiele der für das erfindungsgemäße Verfahren geeigneten sogenannten Seitengruppen-Polymeren sind in der älteren deutschen Patentanmeldung DE-A 43 39 862 beschrieben. Sie sollen im Glaszustand vor Bestrahlung optisch isotrop, transparent, nicht streuend und amorph und nach Bestrahlung transparent und durch eine im Glaszustand reversible lichtinduzierte Ausrichtung der Seitengruppen langzeitstabil doppelbrechend und dichroitisch sein (Der Begriff "amorph" im Sinne der Erfindung schließt auch Zustände ein, in den Mikrodomänen existieren, die so klein sind, daß sie nicht nachweisbar sind; dies ist im allgemeinen dann der Fall, wenn ihr Durchmesser kleiner als 1/20 der Wellenlänge des Lichts ist). Sie weisen eine als Rückgrat wirkende Hauptkette und davon abzweigende kovalent gebundene Seitengruppen auf und besitzen folgende Merkmale:
(1) das Seitengruppenpolymer enthält wenigstens eine photoinduzierbar konfigurationsveränderliche Seitengruppe;
(2) das Seitengruppenpolymer enthält wenigstens eine von (1) verschiedene permanent formanisotrope Seitengruppe mit hoher Anisotropie der molekularen Polarisierbarkeit;
(3) das Seitengruppenpolymer enthält zwischen Hauptkette und den Seitengruppen (1) und (2) flexible Abstandsgruppen.

Photoinduzierbar konfigurationsveränderliche Gruppen sind z.B. Gruppen, die Doppelbindungen enthalten, deren cis- und trans-Konfigurationen durch die Einwirkung von Licht ineinander überführbar sind. Diese Gruppen können zusätzlich eine hohe molekulare Formanisotropie aufweisen, die jedoch nicht permanent ist.

Permanent formanisotrope Gruppen sind z.B. Gruppen, die eine starre, stäbchenförmige Molekülgestalt (engl.: rod-like) haben, z.B. Bisphenylgruppen, Benzoesäureanilidgruppen oder Benzoesäurephenylestergruppen.

Thermodynamisch wird die Ausbildung flüssig-kristalliner Ordnungszustände dadurch unmöglich, daß die Seitengruppenpolymeren ein oder mehrere Strukturmerkmale (4) aus den Gruppen (a) bis (g) aufweist:
(a) es werden wenigstens zwei Arten von Abstandsgruppen (3) unterschiedlicher Länge eingebaut;
(b) wenigstens ein Teil der Abstandsgruppen (3) weist Heteroatome auf;
(c) wenigstens ein Teil der Abstandsgruppen (3) weist Verzweigungen auf;
(d) wenigstens ein Teil der Seitengruppen (1) oder (2) weist Verzweigungen auf;
(e) wenigstens ein Teil der Seitengruppen (1) oder (2) endet in verzweigten Endgruppen;
(f) wenigstens ein Teil der Monomerbausteine des Seitengruppenpolymers bildet keine flüssig-kristallinen Phasen aus;
(g) das Seitengruppenpolymer enthält eine weitere Seitengruppe (5), die keine permanente Formanisotropie aufweist.

Bevorzugte Seitenkettenpolymere enthalten die Strukturelemente 1 und 2 mit hoher molekularer Formanisotropie und hoher Anisotropie der molekularen Polarisierbarkeit, wobei jedoch die aus der Formanisotropie und anderen zwischenmolekularen Wechselwirkungen der Seitengruppen resultierende Tendenz der Ausbildung flüssigkristalliner Ordnungszustände durch die Strukturmerkmale a-g wirksam unterdrückt wird. Sie verbinden damit die guten optischen Eigenschaften amorpher Filme und deren im Vergleich zu flüssigkristallinen Monodomänenfilmen signifikant vereinfachte technologische Herstellung mit hohen Werten der lichtinduzierten optischen Anisotropie, wie sie bisher nur in Monodomänen flüssigkristalliner Polymere bekannt waren.

Kinetisch kann die Ausbildung flüssigkristalliner Ordnungszustände in den Seitenkettenpolymeren dadurch unterdrückt werden,
- daß durch die Strukturelemente a-g die Ordnungstendenz der Polymere weitestgehend abgebaut wird und die Polymeren nur noch geringe Phasenübergangsenthalpien aufweisen (ΔH<0,8 J/g), oder
- daß durch sehr starke zwischenmolekulare Wechselwirkungen der Seitengruppen 1 und 2 (Wasserstoffbrückenbildung und/oder CT-Wechselwirkungen) die Ausbildung einer lichtstreuenden Polydomänenstruktur unterdrückt wird oder
- daß durch eine hohe Viskosität der isotropen Polymerfilme oberhalb des Klärpunktes (z.B. bei Polymeren mit kurzen Spacern oder steifen Polymerhauptketten) ebenfalls die Ausbildung der lichtstreuenden flüssig-kristallinen Polydomänenstruktur unterdrückt wird oder
- die Polymeren durch rasches Abkühlen aus der isotropen Schmelze in den Glaszustand zu optisch isotropen, homogenen, nicht lichtstreuenden Produkten eingefroren werden.

Vorzugsweise wird die Hauptkette des Seitengruppenpolymers von Monomeren, die die Seitengruppe (1) über Abstandsgruppe (3) tragen, von Monomeren, die die Seitengruppe (2) über Abstandsgruppen (3) tragen und gegebenenfalls weiteren Monomeren gebildet, wobei insbesondere der Anteil der Monomeren, die die Seitengruppe (1) aufweisen, 25 bis 80 Mol-%, vorzugsweise 30 bis 70 Mol-%, der Anteil der Monomeren, die die Seitengruppe (2) aufweisen, 20 bis 75 Mol-%, vorzugsweise 30 bis 70 Mol-%, und der Anteil der weiteren Monomeren 0 bis 50 Mol-% betragen, jeweils bezogen auf die Summe sämtlicher eingebauter Monomereinheiten.

Als "weitere" wiederkehrende Einheiten kommen alle Bausteine in Betracht, die sich chemisch in das Seitengruppenpolymer einbauen lassen. Sie dienen im wesentlichen lediglich dazu, die Konzentration der Seitengruppen I und II im Polymer zu verringern und bewirken also quasi einen "Verdünnungs"effekt. Im Falle von Poly(meth)acrylaten umfassen die "weiteren" Monomeren ethylenisch ungesättigte copolymerisierbare Monomere, die bevorzugt α-substituierte Vinylgruppen oder ß-substituierte Allylgruppen tragen, bevorzugt Styrol; aber auch beispielsweise kernchlorierte und -alkylierte bzw. -alkenylierte Styrole, wobei die Alkylgruppen 1 bis 4 Kohlenstoffatome enthalten können, wie z.B. Vinyltoluol, Divinylbenzol, α-Methylstyrol, tert.-Butylstyrole, Chlorstyrole; Vinylester von Carbonsäuren mit 2 bis 6 Kohlenstoffatomen, bevorzugt Vinylacetat; Vinylpyridin, Vinylnaphthalin, Vinylcyclohexan, Acrylsäure und Methacrylsäure und/oder ihre Ester (vorzugsweise Vinyl-, Allyl- und Methallylester) mit 1 bis 4 Kohlenstoffatomen in der Alkoholkomponente, ihre Amide und Nitrile, Maleinsäureanhydrid, -halb- und -diester mit 1 bis 4 Kohlenstoffatomen in der Alkoholkomponente, -halb- und -diamide und cyclische Imide wie N-Methylmaleinimid oder N-Cyclohexylmaleinimid; Allylverbindungen wie Allylbenzol und Allylester, wie Allylacetat, Phthalsäurediallylester, Isophthalsäurediallylester, Fumarsäurediallylester, Allylcarbonate, Diallylcarbonate, Triallylphosphat und Triallylcyanurat.

Das Seitengruppenpolymer enthält als Hauptkette vorzugsweise ein Poly-(meth)acrylat, ein Polysiloxan, ein Polyolefin, ein Poly-α-oxiran, einen Polyether, ein Polyamid, ein Polyurethan, einen Polyester, ein Polysulfon oder ein Polycarbonat, als Seitengruppe (1) einschließlich der flexiblen Abstandsgruppe (3) Einheiten der Formel (I) und als Seitengruppe (2) einschließlich der flexiblen Abstandsgruppe (3) Einheiten der Formel (II):

-S¹-Q¹-P-X¹ (I)

-S²-Q²-M-X² (II)

worin
- S¹, S²: eine abstandshaltende Gruppe,
- Q¹, Q²: -O-, -CO-O-, -O-CO-, -CO-NR¹-, -NR¹-CO- oder -NR¹-,
- P: eine photoinduzierbar konfigurationsveränderliche Gruppe,
- M: eine von P verschiedene, permanent formanisotrope Gruppe,
- X¹, X²,: einen endständigen Substituenten und
- R¹: Wasserstoff oder C₁-C₄-Alkyl bedeuten.

Bevorzugt sind Seitengruppen, worin
- S¹, S²: eine gegebenenfalls durch -O-, -NH- oder -Si(R⁵)₂- unterbrochene Gruppe -(CH₂)ₙ-,
- n: 2 bis 14,
- P: - Ar(N = N-Ar)ₘ -, - ArN = CR² - Ar -, - Ar - CR² = N - Ar - , -Ar-CR²=CR³-COOR⁴-, -Ar-(CH=CH-Ar)ₘ, -ArCR²=CR³-Ar, -Ar-CR²=CR³-COR⁴ oder -Ar-CR²=CR³-Cyclohexyl,
- R², R³, R⁴: H, C₁-C₄-Alkyl, CN, OR⁵, COOR⁵, Halogen, NO₂ oder NR⁵,
- R⁵: H oder C₁-C₄-Alkyl,
- Ar: ein gegebenenfalls substituiertes aromatisches Ringsystem mit 5 oder 6 Ringgliedern,
- m: 1 oder 2,
- M: ein Derivat des Cholesterins oder des Cholestans oder eine der Gruppen -Ar-Ar-, -Ar-Y-Ar-, Ar-Y-Alk-, -Alk-Y-Ar-, -Alk-Ar- oder -Ar-Alk-,
- Y: -CO-O-, -OCO-, -CONH-, -NHCO-, -N=CH-, -CH=N-, -N-NO-, -C(R⁵)₂-, -C(R⁵)₂-C(R⁵)₂-, -O- oder -NR¹-,
- Alk: eine geradkettige, verzweigte oder cyclische, gegebenenfalls substituierte, gegebenenfalls olefinisch ungesättigte aliphatische Gruppe mit 1 bis 14 C-Atomen,
- X¹, X²: Wasserstoff, CN, Alk, Y-Alk, Aryl, Y-Ar, -N(Alk)₂, Halogen oder NO₂ bedeuten.

Bevorzugte Seitenkettenpolymeren sind solche, bei denen die Hauptkette ein Poly(meth)acrylat ist,
- P: -Ar-(N=N-Ar)ₘ-, Ar-CR²=CR³-Ar-

oder 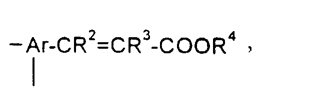
- M: einen Rest des Biphenyls, eines Benzoesäureanilids oder eines Benzoesäurephenylesters,
- X¹, X²: H, CN, C₁-C₈-Alkyl, C₁-C₈-Alkoxy, C₅-C₇-Cycloalkoxy, Phenyl, Phenoxy, C₁-C₄-Dialkylamino oder Nitro bedeuten.

Besonders bevorzugte Seitenkettenpolymere enthalten wiederkehrende Einheiten der Formeln 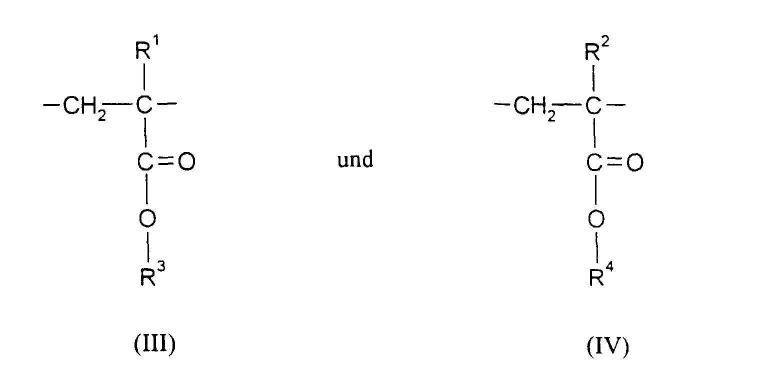 worin
- R¹ und R²: unabhängig voneinander H oder CH₃,
- R³: 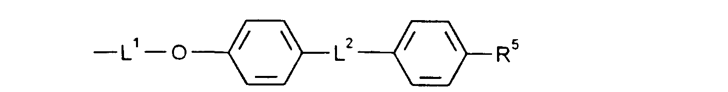
- R⁴: 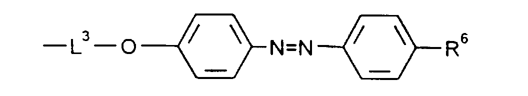
- L¹ und L³: unabhängig voneinander eine gegebenenfalls durch 1 bis 3 O-Atome unterbrochene Alkylengruppe mit 2 bis 14 C-Atomen,
- L²: eine direkte Bindung, -CO-NH-, -NH-CO-, -CO-O- oder -O-CO- und
- R⁵ und R⁶: unabhängig voneinander einen Substituenten, insbesondere H, CN, C₁-C₆-Alkyl, C₁-C₆-Alkoxy, Di-C₁-C₄-alkylamino, Halogen oder Nitro bedeuten.

Das Seitengruppenpolymer hat bevorzugt eine Glasübergangstemperatur Tg von mindestens 40°C. Sie kann beispielsweise nach B. Vollmer, Grundriß der Makromolekularen Chemie, S. 406 bis 410, Springer-Verlag, Heidelberg 1962, gemessen werden.

Die geeigneten Seitenkettenpolymeren besitzen im allgemeinen ein als Gewichtsmittel bestimmtes Molekulargewicht von 5.000 bis 500.000, vorzugsweise von 8.000 bis 500.000, bestimmt durch Gelpermeationschromatographie (geeicht mit Polystyrol).

Die Strukturelemente mit hoher Formanisotropie und hoher Anisotropie der molekularen Polarisierbarkeit sind die Voraussetzung für hohe Werte der optischen Anisotropie. Durch die Struktur der Polymeren werden die zwischenmolekularen Wechselwirkungen der Strukturelemente (1) und (2) so eingestellt, daß die Ausbildung flüssigkristalliner Ordnungszustände unterdrückt wird und optisch isotrope, transparente nichtstreuende Filme hergestellt werden können. Andererseits sind die zwischenmolekularen Wechselwirkungen dennoch stark genug, daß bei Bestrahlung mit polarisiertem Licht ein photochemisch induzierter, kooperativer, gerichteter Umorientierungsprozeß der photochromen und der nichtphotochromen Seitengruppen bewirkt wird.

Bevorzugt treten zwischen den Seitengruppen (1) und (2) schwache Wechselwirkungskräfte auf, die ausreichen, daß die photoinduzierte Konfigurationsänderung der Seitengruppe (1) eine gleichgerichtete - sogenannte kooperative - Umorientierung der Seitengruppe (2) bewirkt.

In den optisch isotropen amorphen photochromen Polymeren können extrem hohe Werte der optischen Anisotropie induziert werden (Δn = 0,01 bis 0,2). Die Werte sind denen vergleichbar, die in Monodomänen flüssigkristalliner Polymerer erhalten wurden, oder sind sogar größer als diese. Sie sind signifikant größer im Vergleich zu amorphen Polymeren ohne diese Strukturelemente.

Durch den Einfluß von aktinischem Licht werden in den Seitenkettenpolymeren Ordnungszustände generiert und modifiziert und damit ihre optischen Eigenschaften moduliert.

Als Licht wird vorzugsweise linear polarisiertes Licht verwendet, dessen Wellenlänge im Bereich der Absorptionsbande der photoinduzierbar konfigurationsveränderlichen Seitengruppen (1) liegt.

Die Herstellung der Seitengruppenmonomeren und ihre Polymerisation können nach literaturbekannten Verfahren durchgeführt werden (beispielsweise DD 276 297, DE 3 808 430, Makromolekulare Chemie 187, 1327-1334 (1984), SU 887 574, Europ. Polym. 18, 561 (1982) und Liq. Cryst. 2, 195 (1987)).

Die Herstellung perfekter makroskopisch einheitlicher Filme gelingt, ohne daß aufwendige Orientierungsverfahren unter Nutzung externer Felder und/oder von Oberflächeneffekten notwendig sind. Sie lassen sich durch Spincoating, Tauchen, Gießen oder andere technologisch leicht beherrschbare Beschichtungsverfahren auf Unterlagen aufbringen, durch Pressen oder Einfließen zwischen zwei transparente Platten bringen oder einfach als selbsttragenden Film durch Gießen oder Extrudieren präparieren. Solche Filme lassen sich durch schlagartiges Abkühlen, d.h. durch eine Abkühlungsrate von > 100 K/min, oder durch rasches Abziehen des Lösungsmittels auch aus flüssig-kristallinen Polymeren herstellen, die Strukturelemente im beschriebenen Sinne enthalten.

Die Schichtdicke liegt vorzugsweise zwischen 0,1 µm und 1 mm, besonders zwischen 0,5 und 100 µm.

Die lichtinduzierte Orientierung der Seitengruppen bzw. das Einschreiben von Information erfolgt durch Bestrahlung mit für die photoinduzierbar konfigurationsveränderliche Gruppe geeignetem aktinischem Licht. Dies führt zu einer winkelabhängigen Photoselektion, die eine Umorientierung der photochromen Gruppen und - durch einen kooperativen Effekt - eine kontinuierliche, gleichgerichtete Umorientierung der permanent formanisotropen Seitengruppen bis maximal senkrecht zum elektrischen Vektor des Anregungslichtes bewirkt.

Die Lichtexposition kann flächig oder lokal mit linear polarisiertem, kohärenten oder nicht kohärenten, monochromatischen Licht erfolgen, dessen Wellenlänge im Absorptionsbereich der photoinduzierbar konfigurationsveränderlichen Seitengruppen liegt.

Die Information kann mit einem Laser punktförmig oder mit einem Laser oder einer Lampe flächig unstrukturiert oder unter Verwendung einer Maske bei einer Intensität von 0,1 bis 5.000 mW/cm² in einer Zeit zwischen 0,1 und 6000 sec. eingeschrieben werden.

Der Umorientierungsprozeß ist außerordentlich wirksam. Die unterhalb Tg erzielbare Doppelbrechungsänderung Δn beträgt vorzugsweise 0,01 bis 0,20, vorzugsweise 0,05 bis 0,10.

Die hohen Werte der photochemisch induzierten Doppelbrechung und des photochemisch induzierten Dichroismus resultieren aus der molekularen Struktur der Seitengruppen, dem kooperativen Mechanismus der lichtinduzierten Orientierung zu einem Zustand gleicher makroskopischer Orientierung der photochromen und nichtphotochromen, aber permanent formanisotropen Seitengruppen sowie der Überwindung von Grenzen des Umorientierungsprozesses, wie sie in flüssig-kristallinen Monodomänen bestehen, da die zwischenmolekularen Wechselwirkungskräfte des flüssigkristallinen Guest-Host-Systems die primär vorhandene Ordnung des geordneten Gebildes stabilisieren.

Die Vorzugsorientierung ist frei wählbar; sie hängt allein von der Wahl der Richtung des elektrischen Vektors des Anregungslichtes in Bezug auf den Polymerkörper ab. Das Ausmaß der Orientierung ist bei konstanter Temperatur und Wellenlänge allein von der eingestrahlten Energie abhängig, die entweder über die Zeit oder die Leistung der Lichtquelle variiert werden kann. Es sind somit die Orientierung, die Doppelbrechung und der Dichroismus frei wählbare Parameter, die sich unter gleichbleibenden Randbedingungen bei wiederholtem Einschreiben und Löschen exakt reproduzieren lassen.

Die Effekte sind temperaturabhängig. Erfindungsgemäß läßt sich dieser Primäreffekt durch Erwärmen deutlich steigern, ohne daß noch einmal belichtet werden müßte. Beim Vergleich der Effekte in verschiedenen Polymeren dient deren Glastemperatur Tg als Bezugspunkt. Die Größe der maximal induzierbaren optischen Anisotropie steigt bei Temperaturerhöhung zunächst an. Bei amorphen Polymeren sinkt sie im Bereich der Glasübergangstemperatur drastisch ab. Im Falle der amorph eingefrorenen flüssig-kristallinen Polymeren steigt sie auch oberhalb von Tg weiter mit der Temperatur, um schließlich in der Nähe des Klärpunkts ganz zu verschwinden.

In den Seitenkettenpolymeren kann eine reproduzierbare, definierte, kontinuierlich durchstimmbare, langzeitstabile Doppelbrechung erzeugt werden. Sie läßt sich in Transmission im polarisierten Licht als definierter Kontrast darstellen. Bei Verwendung von Polymeren, deren Seitengruppen dichroitische Eigenschaften haben, läßt sich entsprechend ein Dichroismus der Absorption oder der Emission reproduzierbar, definiert und kontinuierlich durchstimmbar erzeugen. Durch einheitliche Bestrahlungsbedingungen wird im gesamten Polymerfilm eine einheitliche Orientierung erzeugt. Bei lokaler Variation der Bestrahlungsbedingungen wie Energiedosis und Polarisationsrichtung wird ein hinsichtlich der Vorzugsorientierung der Seitengruppen strukturierter Film erzeugt, was zu Pixeln mit unterschiedlicher optischer Anisotropie führt.

Die Vorzugsrichtung in der Orientierungsverteilung des optisch anisotropen Films kann durch Belichten mit unpolarisiertem aktinischem Licht wieder rückgängig gemacht und die optische Isotropie entlang der Flächennormalen wieder hergestellt werden. Erneute Bestrahlung mit der gleichen Quelle, jedoch veränderter Lage des elektrischen Vektors in Bezug auf den Polymerfilm führt zu einer Modifizierung der Richtung und Größe der optischen Anisotropie. Auf diese Weise kann zwischen verschiedenen Zuständen bezüglich der Richtung und Größe der optischen Anisotropie wiederholt geschaltet werden.

Auf der Grundlage dieser Effekte steht mit den beschriebenen Polymeren im Prinzip ein Medium für die reversible, optische Datenspeicherung zur Verfügung. Wie bei der Herstellung der Filme entfallen auch nach dem Löschen der Information alle Maßnahmen zur Wiederherstellung der Monodomäne.

Die Polymeren lassen sich zur digitalen oder analogen Datenspeicherung im weitesten Sinne, beispielsweise zur optischen Signalverarbeitung, zur Fourier-Transformation und -Faltung oder in der kohärenten optische Korrelationstechnik, verwenden. Die laterale Auflösung wird durch die Wellenlänge des Ausleselichts begrenzt. Sie erlaubt eine Pixelgröße von 0,5 bis 100 µm.

Diese Eigenschaft macht die Polymeren zur Verarbeitung von Bildern und zur Informationsverarbeitung mittels Hologrammen besonders geeignet, deren Reproduktion durch Ausleuchten mit einer Referenzstrahl erfolgen kann. Analog läßt sich das Interferenzmuster zweier phasengleicher monochromatischer kohärenter Lichtquellen speichern und durch den Zusammenhang zwischen dem elektrischen Vektor des Lichts und der damit verbundenen Vorzugsrichtung im Speichermedium eine höhere Speicherdichte erzeugen. Entsprechend lassen sich dreidimensionale holographische Bilder speichern. Das Auslesen erfolgt durch Beleuchtung des Hologramms mit monochromatischem, kohärentem Licht. Bei der analogen Speicherung können Werte der Grauskala kontinuierlich und ortsaufgelöst eingestellt werden. Das Auslesen analog gespeicherter Information geschieht im polarisierten Licht, wobei man je nach Stellung der Polarisatoren das positive oder das negative Bild hervorholen kann. Hierbei kann einerseits der durch die Phasenverschiebung von ordentlichem und außerordentlichem Strahl erzeugte Kontrast des Films zwischen zwei Polarisatoren genutzt werden, wobei die Ebenen des Polarisators vorteilhaft einen Winkel von 45° zur Polarisationsebene des Einschreiblichts bilden und die Polarisationsebene des Analysators entweder senkrecht oder parallel zu der des Polarisators steht. Eine andere Möglichkeit besteht in der Detektion des durch induzierte Doppelbrechung verursachten Ablenkwinkels des Leselichts.

Die Polymeren lassen sich als optische Komponenten verwenden, die passiv oder optisch schaltbar sein können. So kann die hohe lichtinduzierte optische Anisotropie zur Modulierung der Intensität und/oder des Polarisationszustandes von Licht benutzt werden. Entsprechend kann man aus einem Polymerfilm durch holographische Strukturierung Komponenten herstellen, die Abbildungseigenschaften haben, die mit Linsen oder Gittern vergleichbar sind.

Die erfindungsgemäß erhältliche Verstärkung kann durch Erwärmen auf eine Temperatur erfolgen, die mindestens die Glasübergangstemperatur ist und höchstens um 0,75 · (T_{c}-T_{g}), vorzugsweise höchstens um 0,6 · (T_{c}-T_{g}) und insbesondere höchstens 0,5 · (T_{c}-T_{g}) höher als T_{g} liegt. Die besten Ergebnisse erzielt man am Maximum der Kurve, die die Abhängigkeit der Effizienz von der Temperatur beschreibt. Sie ist Polymer-abhängig und kann in einem Vorversuch festgestellt werden. Die Zeit bis zum Erhalten der bei der gewählten Temperatur maximal erhältlichen Effizienz ist bei gegebenem Polymer vor allem von der gewählten Temperatur abhängig; sie beträgt 10 sec bis 2 Stunden, vorzugsweise 1 bis 60 und insbesondere 5 bis 30 Minuten.

Die erfindungsgemäß erhaltene Verstärkung ist dauerhaft und, soweit bislang verfolgt werden konnte, über viele Monate, wahrscheinlich auch über Jahre, beständig.

### Beispiel

Die Untersuchung wurde an einem 34 um dicken Film eines Copolymerisats aus den Monomeren 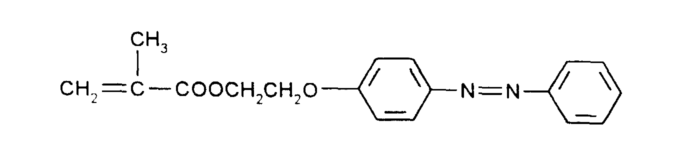 und 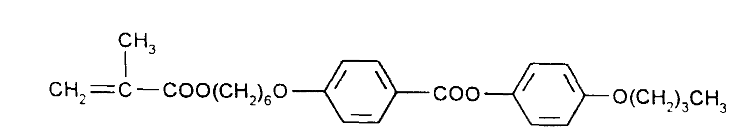 im Molverhältnis 1:1 mit einer Glasübergangstemperatur Tg von 61°C und einer Klärtemperatur Tc von 79°C durchgeführt.

Als Quelle für die Schreibstrahlen diente ein Ar⁺-Ionen-Laser, der mit einer Ausgangsleistung von 150 mW bei einer Wellenlänge von 488 nm im "single frequency"-Modus betrieben wurde. Die Polarisation des Laserlichts war durch die Anordnung der Brewster-Fenster im Laser vorgegeben und stand senkrecht zur Experimentierplatte. Der Laserstrahl wurde in 2 Strahlen gleicher Intensität aufgeteilt. Beide Strahlen wurden unter einem Winkel von 10° auf der Probe zur Interferenz gebracht. Das eingeschriebene holographische Gitter hatte einen Gitterabstand von 1,4 µm.

Der Laserstrahl wurde durch einen bei einer Wellenlänge von 632,8 nm betriebenen Helium-Neon-Laser (Ausgangsleistung 10 mW) erzeugt. Das Licht war im Verhältnis 500:1 polarisiert. Um eine definierte Polarisationsrichtung zu gewährleisten, durchlief der HeNe-Strahl einen Polarisator, der nur die Komponente senkrecht zur Experimentierplatte durchließ.

Das ursprünglich mit einer Effizienz von 30 % eingeschriebene holographische Gitter war nach 2-stündigem Lagern im Dunkeln bis auf eine Restbeugungseffizienz von 7 % relaxiert. Danach wurde der Film in Schritten von 0,5°C erwärmt und zwecks homogener Temperaturverteilung jeweils 600 Sekunden bei der neuen Temperatur getempert. Schon unterhalb Tg zeigte sich ein Anstieg der Effizienz, dem eine starke Zunahme oberhalb Tg folgte. Die Effizienz erreichte bei 67°C ihr Maximum von 37 % und fiel bei höheren Temperaturen wieder ab.

## Patentansprüche

1. Verfahren zur Verstärkung der lichtinduzierten Veränderung in einem Seitenkettenpolymer aus einer Hauptkette und davon über flexible Abstandsgruppen abzweigenden Seitengruppen aus
(1) wenigstens einer photoinduzierbar konfigurationsveränderlichen Seitengruppe und
(2) wenigstens einer von (1) verschiedenen permanent formanisotropen Seitengruppe mit hoher Anisotropie der molekularen Polarisierbarkeit
durch Erwärmen auf eine Temperatur, die zwischen der Glasübergangstemperatur und der Klärtemperatur des Seitenkettenpolymers liegt.

2. Verfahren nach Anspruch 1, dadurch gekennzeichnet, daß der Anteil der Monomereinheiten, die die Seitengruppe (1) aufweisen, 25 bis 80 Mol-% beträgt und der Anteil der Monomereinheiten, die die Seitengruppe (2) aufweisen, 20 bis 75 Mol-% beträgt, jeweils bezogen auf die Summe sämtlicher eingebauter Monomereinheiten.

3. Verfahren nach Anspruch 1, dadurch gekennzeichnet, daß die Seitengruppe (2) eine -Ar (N=N-Ar)ₘ-Einheit mit m = 1 oder 2 enthält.

4. Verfahren nach Anspruch 1, dadurch gekennzeichnet, daß das Seitenkettenpolymer Monomereinheiten aus der Gruppe der Acrylsäure und Methacrylsäureester enthält.

## Claims

1. Process for intensifying the light-induced change in a side-chain polymer composed of a backbone chain and of side groups which branch off via flexible spacing groups and include
(1) at least one photoinducibly reconfigurable side group and
(2) at least one side group which is different from (1), has a permanent shape anisotropy and wherein the molecular polarisability is highly anisotropic
by heating to a temperature between the glass transition temperature and the clear temperature of the side-chain polymer.

2. Process according to claim 1, characterised in that the quantity of monomer units contained in the side group (1) is 25 to 80 mol.% and the quantity of monomer units contained in the side group (2) is 20 to 75 mol.%, each based on the sum of all the incorporated monomer units.

3. Process according to claim 1, characterised in that the side group (2) contains an -Ar(N=N-Ar)ₘ unit wherein m is equal to 1 or 2.

4. Process according to claim 1, characterised in that the side-chain polymer contains monomer units selected from acrylic acid and methacrylic esters.

## Revendications

1. Procédé d'intensification de la modification photo-induite dans un polymère à chaînes latérales, constitué d'une chaîne principale et de groupes latéraux ramifiés sur celle-ci par des groupes flexibles d'écartement, en :
(1) au moins un groupe latéral photo-inductible, à configuration variable, et
(2) au moins un groupe latéral différent de (1), à anisotropie de forme permanente, avec une anisotropie élevée de la polarisabilité moléculaire,
par chauffage à une température qui se situe entre la température de transition vitreuse et la température de clarification du polymère à chaînes latérales.

2. Procédé suivant la revendication 1, caractérisé en ce que la quantité d'unités monomériques qui présentent les groupes latéraux (1), se situe dans l'intervalle allant de 25 à 80% en moles et la quantité d'unités monomériques qui présentent les groupes latéraux (2), se situe dans l'intervalle allant de 20 à 75% en moles, chaque fois sur base de la somme de toutes les unités monomériques incorporées.

3. Procédé suivant la revendication 1, caractérisé en ce que les groupes latéraux (2) contiennent une unité -Ar(N=N-Ar-)ₘ, avec m = 1 ou 2.

4. Procédé suivant la revendication 1, caractérisé en ce que le polymère à chaînes latérales contient des unités monomériques parmi le groupe de l'acide acrylique et des esters de l'acide méthacrylique.
